# EUROPEAN PATENT SPECIFICATION

(11) **EP 4 140 769 B1**
(45) Date of publication and mention of the grant of the patent: **12.02.2025**
(21) Application number: 22190654.8
(22) Date of filing: 16.08.2022
(51) Int. Cl.: B60C 9/20, B60C 9/00

(54) **TIRE WITH MONOFILAMENT BREAKER LAYER**
REIFEN MIT MONOFILAMENT-BRECHSCHICHT
PNEU AVEC COUCHE DE RUPTURE MONOFILAMENTAIRE

(30) Priority: 17.08.2021 US 202117404073
(43) Date of publication of application: 01.03.2023
(73) Proprietor: The Goodyear Tire & Rubber Company, Akron, OH 44316 (US)
(72) Inventor: CELIK, Ceyhan, Stow, 44224 (US)
(74) Representative: Kutsch, Bernd

(56) References cited:
- EP-A1- 3 895 910
- JP-A- H0 438 205
- US-A- 5 082 713
- US-A1- 2018 022 159

## Description

### Field of the Invention

The present invention relates to a tire with a monofilament breaker layer. Preferably, it relates to a tire with a radial carcass reinforcement intended to support heavy loads and inflated to relatively high pressures for high-speed use, in particular an airplane tire. The tire may be a non-pneumatic tire. Preferably, it is a pneumatic tire.

### Background of the Invention

For purposes of this application, the phrase "for a high speed under a heavy load" shall be understood to mean operation of the tire under the conditions that the load subjected to the tire is remarkably high and that a centrifugal force acting on the ground contact zone of the tire, when the tire rotates at a high speed, becomes significantly large and must be taken into consideration. For example, a conventional tire may operate under especially severe conditions as in the case of aircraft and/or similar high speed transport tires subjected to a heavy load. The tire must be suitably sturdy/robust for such a severe condition.

One conventional tire, used under the above-mentioned conditions, may include a side wall portion, a tread portion, a hump portion having a particularly large thickness, and a carcass reinforcing ply. The entire carcass reinforcing ply may extend from one of bead cores to the other bead core. The carcass reinforcing ply may be provided at its outermost layer with a breaker for the purpose of improving cut and/or puncture resistance of the tire.

In such a conventional tire, the carcass reinforcing ply may include plies which are substantially the same in number from the center of the tread portion through the hump portion to the side wall portion and which are uniform in thickness distribution. This thickness distribution may be substantially the same even when the carcass reinforcing ply is provided at its outermost layer with the cut/puncture resistant breaker.

The cut/puncture resistant breaker is suitable to mitigate a decrease of the crown radius of the tire induced by high-speed rotation and corresponding centrifugal force. Such a reduction in a decrease in crown radius allows it to improve the load-bearing-ability of the tire for high speed under a heavy load.

US 2018/022159 A1 describes a tire in accordance with the preamble of claim 1.

US 5,082,713, JP-H04-38205 A and EP 3 895 910, which has been published only after the priority date of this application, each describe a tire comprising a tread, a carcass having at least one ply wound about a pair of bead cores, a crown reinforcement or belt structure, and at least one breaker layer radially inside the tread, wherein the at least one breaker layer is formed of monofilaments inclined at an angle in a range of from 0 degrees to +/- 10 degrees relative to the equatorial plane of the tire.

### Summary of the Invention

The invention relates to a tire in accordance with claim 1.

Dependent claims refer to preferred embodiments of the invention.

A first preferred tire for use under heavy loads and high speeds, in accordance with the present invention, includes a tread, a crown reinforcement or belt structure, a carcass reinforcement with at least one ply wound about a pair of bead cores, and a cut/puncture resistant breaker layer disposed radially adjacent the crown reinforcement or belt structure and radially inside the tread. The cut/puncture resistant breaker layer is formed of monofilaments inclined at from 0 degrees to 10 degrees (or -10 degrees) relative to the equatorial plane of the tire.

According to a preferred aspect of the invention, the breaker layer is disposed adjacent a radially outer surface of the crown reinforcement or belt structure.

According to another preferred aspect of the invention, the breaker layer is disposed adjacent a radially outer surface of an overlay structure of the crown reinforcement or belt structure.

According to yet another preferred aspect of the invention, the breaker layer is disposed adjacent a radially inner surface of an overlay structure of the crown reinforcement or belt structure.

According to still another preferred aspect of the invention, the breaker layer is disposed radially between a first belt of the belt structure or the crown reinforcement and a second belt of the belt structure or the crown reinforcement.

According to yet another preferred aspect of the invention, the breaker layer is disposed radially between the belt structure or the crown reinforcement and an overlay structure of the crown reinforcement or belt structure.

According to still another preferred aspect of the invention, the breaker layer is disposed radially between an undertread of the tread and the crown reinforcement or belt structure.

According to yet another preferred aspect of the invention, the breaker layer is disposed radially adjacent a radially outer surface of the carcass reinforcement.

According to still another preferred aspect of the invention, each of the monofilaments are inclined between 5 degrees and 10 degrees relative to the equatorial plane of the tire.

According to yet another preferred aspect of the invention, each of a first plurality of monofilaments are parallel to each of a remaining first plurality of monofilaments.

According to still another preferred aspect of the invention, each of a second plurality of monofilaments are parallel to each of a remaining second plurality of monofilaments.

According to the invention, each of the first plurality of monofilaments have a first angle of inclination relative to the equatorial plane of the tire and each of the second plurality of monofilaments have a second angle of inclination relative to the equatorial plane of the tire, the first angle being equal and opposite the second angle.

According to still another preferred aspect of the invention, the breaker layer is formed by spirally winding a single monofilament around a radially outer surface of the crown reinforcement or belt structure.

According to yet another preferred aspect of the invention, the breaker layer is formed by spirally winding a single monofilament radially between a first belt layer of the belt structure or the crown reinforcement and a second belt layer of the belt structure or the crown reinforcement.

According to still another preferred aspect of the invention, the monofilaments are formed from textile fibers.

A second preferred tire for use under heavy loads and high speeds, in accordance with the present invention, includes a tread, a crown reinforcement, a carcass reinforcement with at least one ply wound a pair of bead cores, and a cut/puncture resistant breaker layer disposed radially adjacent the crown reinforcement or belt structure and radially inside the tread. The cut/puncture resistant breaker layer is formed of parallel monofilaments inclined at 0 degrees relative to an equatorial plane of the tire.

### Definitions

As used herein and in the claims:
"Aramid" and "Aromatic polyamide" both mean a manufactured fiber in which the fiber-forming substance is generally recognized as a long chain of synthetic aromatic polyamide in which at least 85% of the amide linkages are attached directly to the two aromatic rings. Representative of an aramid or aromatic polyamide is a poly (p- phenyleneterephthalamide).
"Axial" and "axially" refer to lines or directions that are parallel to the axis of rotation of the tire.
"Belt structure" or "Crown Reinforcement" means one and preferably at least two annular layers or plies of parallel cords, woven or unwoven, underlying the tread, unanchored to the bead, and having cords inclined respect to the equatorial plane (EP) of the tire. The belt structure may also include plies of parallel cords inclined at relatively low angles, acting as restricting layers.
"Circumferential" and "circumferentially" mean lines or directions extending along the perimeter of the surface of the annular tire parallel to the equatorial plane (EP) and perpendicular to the axial direction.
"Cord" means one of the reinforcement strands which the reinforcement structures of the tire comprise.
"Cord angle" or "Filament angle" means the acute angle, left or right in a plan view of the tire, formed by a cord or filament with respect to the equatorial plane (CL).
"Cord twist" means each yarn of the cord has its component filaments twisted together a given number of turns per unit of length of the yarn (usually expressed in turns per inch (TPI) or turns per meter (TPM)) and additionally the yarns are twisted together a given number of turns per unit of length of the cord. The direction of twist refers to the direction of slope of the spirals of a yarn or cord when it is held vertically. If the slope of the spirals conforms in direction to the slope of the letter "S", then the twist is called "S" or "left hand". If the slope of the spirals conforms in direction to the slope of the letter "Z", then the twist is called "Z" or "right hand". An "S" or "left hand" twist direction is understood to be an opposite direction from a "Z" or "right hand" twist. "Yarn twist" is understood to mean the twist imparted to a yarn before the yarn is incorporated into a cord, and "cord twist" is understood to mean the twist imparted to two or more yarns when they are twisted together with one another to form a cord. "dtex" is understood to mean the weight in grams of 10,000 meters of a yarn before the yarn has a twist imparted thereto.
"Cut belt ply" refers to a belt having a width less than the tread width, which lies flat over the carcass plies in the crown area of the tire.
"Denier" means the weight in grams per 9000 meters (unit for expressing linear density).
"Dtex" means the weight in grams per 10,000 meters.
"Density" means weight per unit length.
"Elastomer" means a resilient material capable of recovering size and shape after deformation.
"Equatorial plane (CL)" means the plane perpendicular to the tire's axis of rotation and passing through the center of its tread; or the plane containing the circumferential centerline of the tread.
"Fabric" means a network of essentially unidirectionally extending cords, which may be twisted, and which in turn are composed of a plurality of a multiplicity of filaments (which may also be twisted) of a high modulus material.
"Fiber" is a unit of matter, either natural or man-made, that forms the basic element of filaments; characterized by having a length at least 100 times its diameter or width.
"Filament count" means the number of filaments that make up a yarn. Example: 1000 denier polyester has typically approximately 190 filaments.
"Gauge" refers generally to a measurement, and specifically to a thickness measurement.
"Inner" means toward the inside of the tire and "outer" means toward its exterior.
"LASE" is load at specified elongation.
"Lay length" means the distance at which a twisted filament or strand travels to make a 360° rotation about another filament or strand.
"Monofilament" means a single, typically generally large filament, preferably of a synthetic or textile fiber.
"Ply" means a cord-reinforced layer of rubber-coated radially deployed or otherwise parallel cords.
"Radial" and "radially" mean directions radially toward or away from the axis of rotation of the tire.
"Tenacity" means stress expressed as force per unit linear density of the unstrained specimen (cN/tex).
"Tension" for a cord means force on the cord expressed as mN/tex.
"Turns per inch", or TPI, means turns of cord twist for each inch length of cord.
"Yarn" is a generic term for a continuous strand of textile fibers or filaments. Yarn occurs in the following forms: (1) a number of fibers twisted together; (2) a number of filaments laid together without twist; (3) a number of filaments laid together with a degree of twist; (4) a single filament with or without twist (monofilament); and (5) a narrow strip of material with or without twist.

### Brief Description of the Drawings

The present invention will be described by way of example and with reference to the accompanying drawings, in which:
FIG. 1 is a schematic cross-sectional view of an example tire for use with the present invention;
FIG. 2 is a schematic cross-sectional view of the bead of the example tire of FIG. 1;
FIG. 3 is a schematic additional view of the bead of FIG. 2; and
FIG. 4 is a cross sectional view of a ply reinforcement in accordance with the present invention.

### Detailed Description of Preferred Embodiments of the Present Invention

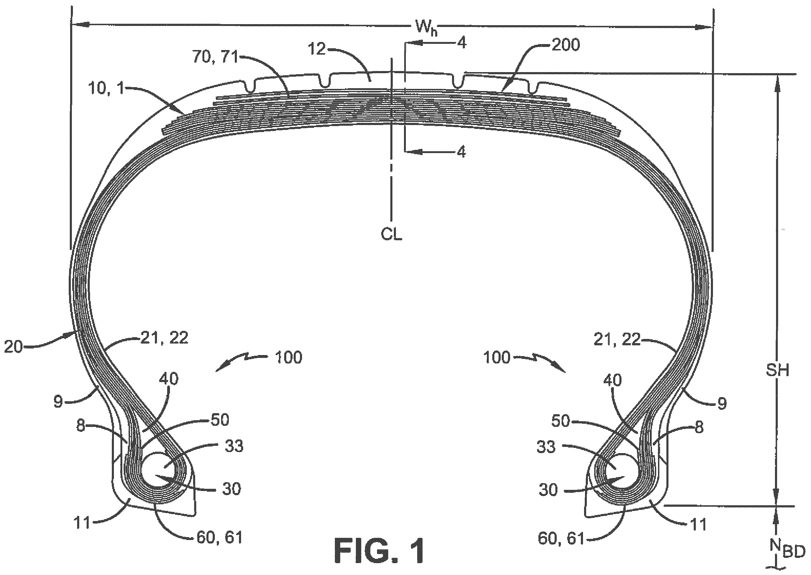

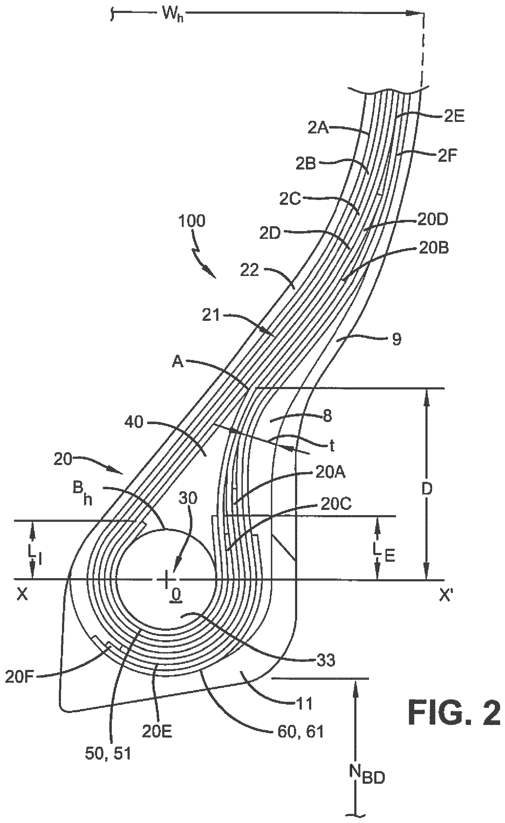

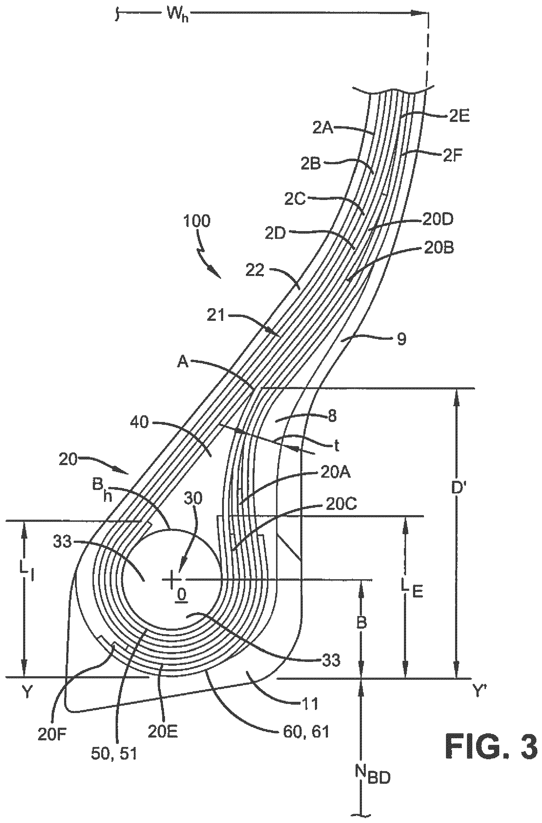

FIG. 1 illustrates an aircraft tire 100 as a preferred embodiment of the present invention. The tire 100 may has a tread 12 with sidewall portions 9 connected to, and extending from, the lateral edges of the tread 12. At the radially inner ends of each sidewall 9 is a bead portion 30. Each bead portion 30 has a bead core 33, an apex 40 extending radially outward from the bead core 33, and preferably at least one chafer layer 60 reinforced with cords 61 to reduce rim chafing of the tire 100. A carcass reinforcing ply structure 20 extends from one bead portion 30 to the opposing bead portion 30, preferably with turnup portions as shown. In greater detail, the tire 100 of FIG. 1 is illustrated by the diagrammatic cross-section views of FIGS. 2 and 3.

With reference to FIGS. 2 and 3, the carcass reinforcement 20 is preferably formed of six plies 2A to 2F of radial textile cords 21. Among these six plies, four axially inner plies 2A, 2B, 2C and 2D may be wound around each circular bead core 33. These four plies may extend from the inside to the outside of the tire 100 in order to form turn-ups 20A, 20B, 20C and 20D. The carcass reinforcement 20 is radially outward of the innerliner 22 of tire 100.

Outward of the bead cores 33 may be a strip or filler 40 of elastomeric material having a substantially triangular shape extending to an apex A radially furthest from the rotation axis of the tire 100 and located a distance D from a reference line XX'. As shown in FIG. 1, the reference line may also be parallel to the axis of rotation and pass through the geometric center O of the circle circumscribed on the cross section of the bead core 33.

A flipper 50, which can be formed of radial textile cords 51 similar to those of plies 20, may be located with an inner end L, slightly above the height B*ₕ* of the bead core 33 and an outer end L*_{E}* may also be slightly above the bead core 33 as measured from line YY'. The ends L*_{I},* L*_{E}* may satisfy a relationship wherein B*ₕ* < L*ₗ*, and L*_{E}* < 0.7D, as measured from the nominal bead diameter N*_{BD}*. To minimize the space occupied by the flipper 50, the cords 51 may be made of a diameter smaller than the ply cords 21.

The carcass may further have two carcass plies 2E and 2F herein called outer plies. These outer plies 2E, 2F may cover the turn-ups 20A through 20D of the inner plies 2A through 2D. The outer plies 2E and 2F may be wound around the bead core 33 over a portion of the circular arc radially outside of the center of bead core 33. The ply ends 20E and 20F may thus be disposed axially inward of the lowest portion of the bead core 33. The ends 20E and 20F may effectively be pinched between the bead core 33 and the rim seat thereby securely anchoring the outer plies 2E, 2F.

The tire bead may have an outer chipper 60 of textile cords 61 wrapped around the ends 20E and 20F assuring protection of the carcass plies against damage during mounting. Radially below the chipper 60 may be a chafer 11 having a rubber gauge in the range between 1.0 mm and 4.1 mm.

Axially outward of the chafer 11 and the plies 20E and 20F may be an elongated strip 8 of elastomeric material extending from radially inward of the bead 30 adjacent the chafer 11 to a radial location at, or slightly above, the turn-up 20B, but below the turn-up 20D. As shown, this strip 8 may be interposed between the sidewall rubber 9 and the outer ply 20F. At a location almost equal to the radial height D of the apex A, the strip 8 preferably has have a maximum thickness t of 7.6 mm.

Referring back to FIG. 1, radially outward of the carcass 20 is a crown reinforcement or belt structure 10. The belt structure 10 preferably has at least belt two ply layers of cords 1 inclined at an angle between 5 degrees to 35 degrees. The cords 1 in each belt ply layer are preferably parallel to each other and crossed relative to the cords 1 in the adjacent belt ply layer. The radial carcass reinforcement is radially surmounted by the crown reinforcement, or belt structure 10, and is preferably formed of a plurality of textile layers of reinforcement elements or cords 1 which are inclined relative to the circumferential direction by a predetermined angle. So as to avoid free ends of crown/belt plies, the layers are preferably laid out by winding around a cylindrical or rounded form or a carcass reinforcement blank a strip of at least one textile reinforcement element or cord 1 from one axial edge of the layer to the other thereby forming the desired angle with the equatorial plane of the tire 100.

In a preferred embodiment of the invention, there is an overlay ply 70 radially outward of the belt structure 10. The overlay ply 70 is shown in FIG. 1 radially outward of the belt plies 10, but such an overlay ply 70 may also be located radially inward of the belt plies 10 or between two of the belt plies 10. The overlay ply 70 is preferably formed of cords 71 inclined at between 5 degrees and 10 degrees relative to the equatorial plane of the tire 100. The inclination angle of the cords 71 may be partially dependent upon the formation and application method of the overlay ply 70. The overlay ply 70 may be spirally wound onto a tire building machine - preferably with spiral winding of a single elastomeric encased cord or an elastomeric ribbon of multiple cords having a width between 5 mm and 30 mm and a cord density in a range between 10 ends per inch (25.4 ends per cm) and 50 ends per inch (130 ends per cm). The overlay ply 70 may also be a cut ply of parallel cords 71. A spirally wound layer may have a greater inclination angle relative to the equatorial plane than a cut ply of parallel cords 71. Each of the elements described above may employ the textile cords 1, 21, 51, 61, and/or 71 including the carcass plies 20, the belt plies 10 or strips, the chafer 60, the flipper 50, and/or the overlay 70.

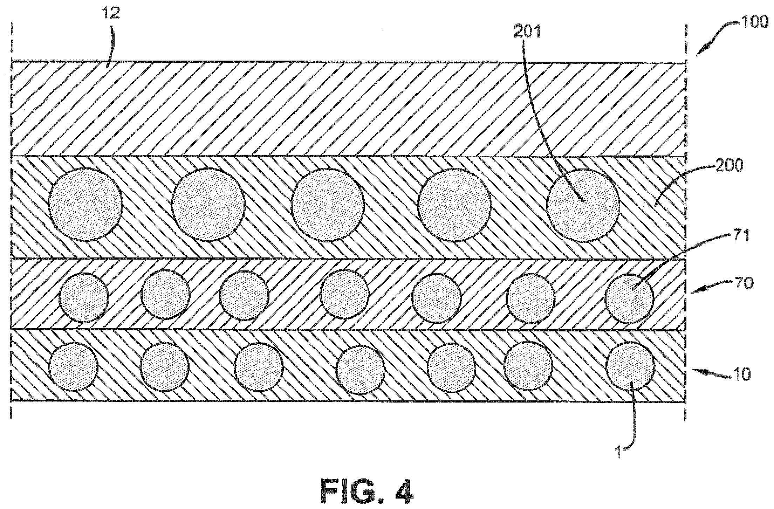

In accordance with the present invention, one of more preferably cut/puncture resistant breaker layers 200 may be disposed adjacent a radially outer surface of the overlay 70 (FIGS. 1 & 4) and radially inside the tread 12, adjacent a radially outer surface of the belt structure 10 radially inside the overlay 70, and/or radially between layers of the overlay 70 and/or belt structure 10.

The one or more breaker layer(s) 200 are formed of monofilaments 201 preferably inclined between 5 degrees and 10 degrees relative to the equatorial plane of the tire 100. The inclination angle of the cords 201 may be partially dependent upon the formation and application method of the breaker layer(s) 200.

The breaker layer(s) 200 are preferably spirally wound onto a tire building machine - with spiral winding of a single elastomeric encased monofilament 201 or an elastomeric ribbon of multiple monofilaments 201 preferably having a width between 5 mm and 30 mm and preferably having a density in a range from 10 ends per inch (25.4 ends per cm) to 50 ends per inch (130 ends per cm).

The breaker layer(s) 200 may also be a cut ply of parallel cords 201 (FIG. 4).

A spirally wound layer preferably has a greater inclination angle relative to the equatorial plane than a cut ply 200 of parallel cords 201.

The breaker layer(s) 200 preferably employ textile and/or steel monofilaments 201.

The breaker layers 200 may be paired with a first layer having parallel monofilaments 201 inclined at a first angle relative to the equatorial plane of the tire 100 and a second layer having parallel monofilaments 201 inclined at an equal and opposite second angle relative to the equatorial plane of the tire, similar to belt structures, such as the belt structure 10.

## Claims

1. A tire comprising a tread (12), a carcass having at least one ply (2A-2F), preferably a plurality of plies (2A-2F) such as three to six carcass plies, wound about a pair of bead cores (33), and a crown reinforcement or belt structure (10), and wherein the tire (100) further comprises at least one breaker layer (200) radially inside the tread (12), wherein the at least one breaker layer (200) is formed of monofilaments (201) inclined at an angle in a range of from 0 degrees to +/- 10 degrees relative to the equatorial plane (CL) of the tire (100) and wherein the breaker layer (200) comprises a first plurality of monofilaments (201) having a first angle of inclination relative to the equatorial plane (CL) of the tire (100) and a second plurality of monofilaments (201) having a second angle of inclination relative to the equatorial plane (CL) of the tire (100), the first angle being equal and opposite the second angle, **characterized in that** the tire (100) further comprises at least one overlay ply (70), the at least one overlay ply (10) comprising cords (71) inclined at an angle in a range of from +/-1 degree to +/-15 degrees relative to the equatorial plane (CL) of the tire (100).

2. The tire of claim 1 wherein the cords (71) of the at least one overlay ply (70), are inclined at an angle in a range of from +/-5 degrees to +/- 10 degrees relative to the equatorial plane (CL) of the tire (100).

3. The tire as set forth in at least one of the previous claims wherein the at least one breaker layer (200) is disposed
(i) radially between a first belt of the crown reinforcement or the belt structure (10) and a second belt of the crown reinforcement or the belt structure (10);
(ii) radially between the crown reinforcement or the belt structure (10) and the at least one overlay ply (70);
(iii) radially between an undertread of the tread (12) and the crown reinforcement or the belt structure (10);
(iv) radially adjacent a radially outer surface of the carcass;
(v) radially outside the crown reinforcement or the belt structure (10), preferably adjacent a radially outer surface of the crown reinforcement or belt structure (10);
(vi) adjacent a radially outer surface of the at least one overlay ply (70); or
(vii) adjacent a radially inner surface of the at least one overlay ply (70).

4. The tire as set forth in at least one of the previous claims wherein each of the monofilaments (201) is inclined in a range of from +/-5 degrees to +/-10 degrees relative to the equatorial plane (CL) of the tire (100).

5. The tire as set forth in at least one of the previous claims 1 to 3 wherein each of the monofilaments (201) is oriented at 0 degrees or up to +/-2 degrees relative to the equatorial plane (CL) of the tire (100).

6. The tire as set forth in at least one of the previous claims wherein the at least one breaker layer (200) comprises a spirally wound single monofilament (201) that is preferably located around a radially outer surface of the crown reinforcement or belt structure (10) or that is preferably located between a first belt layer of the belt structure (10) or crown reinforcement and a second belt layer of the belt structure (10) or crown reinforcement.

7. The tire as set forth in at least one of the previous claims wherein the monofilaments are formed from textile fibers.

8. The tire as set forth in at least one of the previous claims wherein the tire (100) is a tire designed for use under heavy loads and high speeds and/or is an aircraft tire.

9. The tire as set forth in at least one of the previous claims wherein the at least one breaker layer (200) is a cut and puncture resistant breaker layer (200).

## Patentansprüche

1. Luftreifen, der eine Lauffläche (12), eine Karkasse, die mindestens eine Lage (2A-2F), vorzugsweise eine Anzahl von Lagen (2A-2F), wie z.B. drei bis sechs Karkassenlagen, umfasst, die um ein Paar Wulstkerne (33) gewickelt sind, und eine Zenitverstärkung oder einen Gürtelaufbau (10), umfasst, und wobei der Reifen (100) ferner mindestens eine schützende Zwischenbaulage (200) in der radialen Richtung innerhalb der Lauffläche (12) umfasst; wobei die mindestens eine schützende Zwischenbaulage (200) aus Monofilamenten (201) besteht, die unter einem Winkel geneigt sind, der in einem Bereich von 0 Grad bis +/- 10 Grad in Bezug auf die Äquatorebene (CI) des Reifens (100) liegt; und wobei die schützende Zwischenbaulage (200) eine erste Menge von Monofilamenten (201) umfasst, die einen ersten Neigungswinkel mit der Äquatorialebene (CL) des Reifens bilden, und eine zweite Menge von Monofilamenten (201), die einen zweiten Neigungswinkel mit der Äquatorialebene (CL) des Reifens bilden, wobei der erste Winkel gleich und entgegengesetzt zu dem zweiten Winkel ist, **dadurch gekennzeichnet, dass** der Reifen (100) ferner mindestens eine Schutzlage (70) umfasst, wobei die mindestens eine Schutzlage (10) Korde (71) umfasst, die unter einem Winkel geneigt sind, der in einem Bereich von +/- 1 Grad bis +/- 15 Grad mit der Äquatorialebene (CL) des Reifens (100) liegt.

2. Luftreifen nach Anspruch 1, wobei die Korde (71) der mindestens einen Schutzlage (70) unter einem Winkel geneigt sind, der in einem Bereich von +/- 5 Grad bis +/- 10 Grad in Bezug auf die Äquatorialebene (CL) des Reifens (100) liegt.

3. Luftreifen wie in mindestens einem der vorhergehenden Ansprüche angegeben, wobei die mindestens eine schützende Zwischenbaulage (200) wie folgt angebracht ist:
(i) in der radialen Richtung zwischen einem ersten Gürtel der Zenitverstärkung oder dem Gürtelaufbau (10) und einem zweiten Gürtel der Zenitverstärkung oder des Gürtelaufbaues (10) ;
(ii) in der radialen Richtung zwischen der Zenitverstärkung oder dem Gürtelaufbau (10) und der mindestens einen Schutzlage (70) ;
(iii) in der radialen Richtung zwischen einer Laufflächenunterlage (12) und der Zenitverstärkung oder dem Gürtelaufbau (10) ;
(iv) in der radialen Richtung angrenzend an eine in der radialen Richtung äußere Oberfläche der Karkasse ;
(v) in der radialen Richtung außerhalb der Zenitverstärkung oder des Gürtelaufbaues (10) vorzugsweise angrenzend an eine in der radialen Richtung äußere Oberfläche der Zenitverstärkung oder des Gürtelaufbaues (10);
(vi) angrenzend an eine radial äußere Oberfläche der mindestens einen Schutzlage (70); oder
(vii) in der radialen Richtung benachbart zu einer inneren Oberfläche der mindestens einen Schutzlage (70).

4. Luftreifen wie in mindestens einem der vorhergehenden Ansprüche angegeben, wobei jedes der Monofilamente (201) unter einem Winkel geneigt ist, der in einem Bereich von +/- 5 Grad bis +/-10 Grad in Bezug auf die Äquatorialebene (CL) des Reifens (100) liegt.

5. Luftreifen wie in mindestens einem der Ansprüche 1 bis 3 angegeben, wobei jedes der Monofilamente (201) unter einem Winkel von 0 Grad oder +/- 2 Grad zur Äquatorialebene (CL) des Reifens (100) orientiert ist.

6. Luftreifen wie in mindestens einem der vorhergehenden Ansprüche angegeben, wobei die mindestens eine schützende Zwischenbaulage (200) ein einzelnes spiralförmig gewickeltes Monofilament (201) umfasst, das vorzugsweise um eine radial äußere Oberfläche der Gürtelverstärkung oder des Gürtelaufbaus (10) herum angebrachtet ist oder das vorzugsweise zwischen einer ersten Gürtelschicht des Gürtelaufbaues (10) oder der Zenitverstärkung oder und einer zweiten Gürtelschicht des Gürtelaufbaues (10) oder der Zenitverstärkung angeordnet ist.

7. Luftreifen wie in mindestens einem der vorhergehenden Ansprüche angegeben, wobei die Monofilamente aus Textilfasern hergestellt sind.

8. Luftreifen wie in mindestens einem der vorhergehenden Ansprüche angegeben, wobei der Luftreifen (100) einen Luftreifen darstellt, der für den Einsatz unter schweren Lasten und bei hohen Geschwindigkeiten ausgelegt ist, und/oder einen Luftreifen darstellt, der für ein Luftfahrzeug bestimmt ist.

9. Luftreifen wie in mindestens einem der vorhergehenden Ansprüche angegeben, wobei die mindestens eine schützende Zwischenbaulage (200) eine schützende Zwischenbaulage darstellt, die gegen Schnitte und Durchstiche beständig ist.

## Revendications

1. Bandage pneumatique qui comprend une bande de roulement (12), une carcasse qui possède au moins une nappe (2A-2F), de préférence un certain nombre de nappes (2A-2F), comme par exemple trois à six nappes de carcasse, qui sont enroulées autour d'une paire de tringles de talons (33), et un renforcement de sommet ou une structure de ceintures (10), et dans lequel le bandage pneumatique (100) comprend en outre au moins une nappe de sommet de protection (200) dans la direction radiale à l'intérieur de la bande de roulement (12) ; dans lequel ladite au moins une nappe de sommet de protection (200) est constituée par des monofilaments (201) qui sont inclinés en formant un angle qui se situe dans une plage allant de 0 degré à +/- 10 degrés par rapport au plan équatorial (CL) du bandage pneumatique (100) ; et dans lequel la nappe de sommet de protection (200) comprend une première quantité de monofilaments (201) qui forment un premier angle d'inclinaison avec le plan équatorial (CL) du bandage pneumatique et une deuxième quantité de monofilaments (201) qui forment un deuxième angle d'inclinaison avec le plan équatorial (CL) du bandage pneumatique, le premier angle étant égal et opposé au deuxième angle, **caractérisé en ce que** le bandage pneumatique (100) comprend en outre au moins une nappe de recouvrement (70), ladite au moins une nappe de recouvrement (10) comprenant des câblés (71) qui sont inclinés en formant un angle qui se situe dans une plage allant de +/-1 degré à +/- 15 degrés avec le plan équatorial (CL) du bandage pneumatique (100).

2. Bandage pneumatique selon la revendication 1, dans lequel les câblés (71) de ladite au moins une nappe de recouvrement (70) sont inclinés en formant un angle qui se situe dans une plage allant de +/-5 degrés à +/- 10 degrés par rapport au plan équatorial (CL) du bandage pneumatique (100).

3. Bandage pneumatique tel qu'indiqué dans au moins une des revendications précédentes, dans lequel ladite au moins une couche de sommet de protection (200) est disposée :
(i) dans la direction radiale, entre une première ceinture du renforcement de sommet ou de la structure de ceintures (10) et une deuxième ceinture du renforcement de sommet ou de la structure de ceintures (10) ;
(ii) dans la direction radiale, entre le renforcement de sommet ou la structure de ceintures (10) et ladite au moins une nappe de recouvrement (70) ;
(iii) dans la direction radiale, entre une sous-sculpture de la bande de roulement (12) et le renforcement de sommet ou la structure de ceintures (10) ;
(iv) dans la direction radiale, en position adjacente à une surface externe, dans la direction radiale, de la carcasse ;
(v) dans la direction radiale, à l'extérieur du renforcement de sommet ou de la structure de ceintures (10), de préférence en position adjacente à une surface externe, dans la direction radiale, du renforcement de sommet ou de la structure de ceintures (10).
(vi) en position adjacente à une surface externe, dans la direction radiale, de ladite au moins une nappe de recouvrement (70) ; ou
(vii) en position adjacente à une surface interne, dans la direction radiale, de ladite au moins une nappe de recouvrement (70).

4. Bandage pneumatique tel qu'indiqué dans au moins une des revendications précédentes, dans lequel chacun des monofilaments (201) est incliné en formant un angle qui se situe dans une plage allant de +/- 5 degrés à +/- 10 degrés par rapport au plan équatorial (CL) du bandage pneumatique (100).

5. Bandage pneumatique tel qu'indiqué dans au moins une des revendications 1 à 3, dans lequel chacun des monofilaments (201) est orienté en formant un angle de 0 degré ou qui s'élève à +/- 2 degrés par rapport au plan équatorial (CL) du bandage pneumatique (100).

6. Bandage pneumatique tel qu'indiqué dans au moins une des revendications précédentes, dans lequel ladite au moins une nappe de sommet de protection (200) comprend un monofilament unique enroulé en spirale (201) qui est de préférence situé autour d'une surface externe, dans la direction radiale, du renforcement de sommet ou de la structure de ceintures (10) ou qui est de préférence situé entre une première couche de ceinture de la structure de ceintures (10) ou du renforcement de sommet et une deuxième couche de ceinture de la structure de ceintures (10) ou du renforcement de sommet.

7. Bandage pneumatique tel qu'indiqué dans au moins une des revendications précédentes, dans lequel les monofilaments sont réalisés à partir de fibres textiles.

8. Bandage pneumatique tel qu'indiqué dans au moins une des revendications précédentes, dans lequel le bandage pneumatique (100) représente un bandage pneumatique qui est conçu pour être utilisé sous de lourdes charges et à des vitesses élevées et/ou représente un bandage pneumatique qui est destiné à un aéroplane.

9. Bandage pneumatique tel qu'indiqué dans au moins une des revendications précédentes, dans lequel ladite au moins une nappe de sommet de protection (200) représente une couche de sommet de protection qui résiste aux coupures et aux crevaisons.
